# EUROPEAN PATENT APPLICATION

(11) **EP 4 261 453 A1**
(43) Date of publication of application: **18.10.2023**
(21) Application number: 23163940.2
(22) Date of filing: 24.03.2023
(51) Int. Cl.: F17C 13/04, F16K 1/02, F16K 1/52, F16K 1/06

(54) **FLOW RATE ADJUSTMENT DEVICE**

(30) Priority: 25.03.2022 IT 202200005933
(71) Applicant: Nordgas S.r.l., 23845 Costa Masnaga (LC) (IT)
(72) Inventor: INVERNIZZI, Gianmario, 23900 LECCO (IT)
(74) Representative: Modiano, Micaela Nadia

(57) **Abstract**

A flow rate adjustment device (1), particularly for boilers and the like, which comprises a valve body (2) which extends along a preferred direction (3) and defines inside it a first and a second chamber (5) which communicate with each other through a passage channel (6) and communicate respectively with an intake manifold (7) and a discharge manifold (8).

At the passage channel (6) there are flow control means (9) which are adapted for the transition of the adjustment device (1) from a closed state, in which the passage channel (6) is blocked by the flow control means (9) with consequent isolation of the two chambers (4, 5) with respect to each other, to an open state, in which the passage channel (6) is free from the flow control means (9) in such a manner as to place the two chambers (4, 5) in mutual communication for the passage of a fluid from the intake manifold (7) to the discharge manifold (8).

The peculiarity of the invention consists in that the flow control means (9) comprise a main flow control element (10) and a secondary flow control element (11) which can be actuated in sequence with respect to each other so as to define an intermediate state of the adjustment device (1) in which the passage channel (6) is partially blocked, with consequent mutual communication of the two chambers (4, 5) for the passage of a fluid from the intake manifold (7) to the discharge manifold (8) with a lower fluid flow rate than the fluid flow rate in the open state.

## Description

The present invention relates to a flow rate adjustment device, particularly for boilers and the like.

Modern boilers for heating and producing domestic hot water for single-family use need to have a very wide operating range, especially at the lower end of the range.

This is because new dwellings are more isolated and need increasingly less power to maintain the operating temperature.

In order to obtain low power, the flow of gas is limited and it becomes difficult to have an increase curve step after step with a sufficient gradient for fine adjustment.

In order to have the high flow rate necessary for heating sanitary water, the passage of the gas must have a sufficient cross-section, which is not adapted when a low flow rate is required.

In order to allow a variation of the flow rate of gas as a function of the power levels required, conventional boilers are equipped with devices for adjusting the gas flow rate which have a flow control element controlled by an electric stepper motor which is characterized by a constant travel throughout its range of operation.

As a consequence, the gas passage area is immediately increased in a discrete fashion, with a very high percentage with respect to when the opening is close to the maximum opening, with no possibility of adjusting the gas flow rate in a linear way.

This implies the impossibility of having a sufficiently reduced gas flow rate for low power levels, like those required by the latest generation of boilers.

The aim of the present invention consists in providing a gas flow rate adjustment device that is capable of having a percentage increase of the linear flow rate starting from zero - total closure - up to the inflection point given by the diameter and by the travel of the flow control element.

Within this aim, an object of the present invention consists in providing a gas flow rate adjustment device that offers a space occupation that is practically unchanged with respect to conventional adjustment devices, so as to ensure their total interchangeability.

Another object of the present invention consists in providing a safety device that offers the highest guarantees of reliability and efficiency.

Another object of the present invention consists in providing a safety device that can be provided with technologies that are per se known and which therefore is of low cost.

This aim and these and other objects which will become more apparent hereinafter are achieved by a flow rate adjustment device, particularly for boilers and the like, which comprises a valve body which extends along a preferred direction and defines inside it a first and a second chamber which communicate with each other through a passage channel and communicate respectively with an intake manifold and a discharge manifold; at said passage channel there being flow control means adapted for the transition of said adjustment device from a closed state, in which said passage channel is blocked by said flow control means with consequent isolation of said two chambers with respect to each other, to an open state, in which said passage channel is free from said flow control means in such a manner as to place said two chambers in mutual communication for the passage of a fluid from said intake manifold to said discharge manifold; characterized in that said flow control means comprise a main flow control element and a secondary flow control element which can be actuated in sequence with respect to each other so as to define an intermediate state of said adjustment device in which said passage channel is partially blocked, with consequent mutual communication of said two chambers for the passage of a fluid from said intake manifold to said discharge manifold with a lower fluid flow rate than the fluid flow rate in said open state.

Further characteristics and advantages of the invention will become more apparent from the detailed description of a preferred, but not exclusive, embodiment of a flow rate adjustment device, particularly for boilers and the like, which is illustrated by way of non-limiting example with the aid of the accompanying drawings wherein:
Figure 1 is a cross-sectional view of the flow rate adjustment device according to the invention in its closed state;
Figure 2 is a cross-sectional view of the flow rate adjustment device shown in Figure 1 in its intermediate state;
Figure 3 is a cross-sectional view of the flow rate adjustment device shown in the previous figures in its open state;
Figure 4 is a chart showing the flow gradient of the flow rate adjustment device shown in the previous figures.

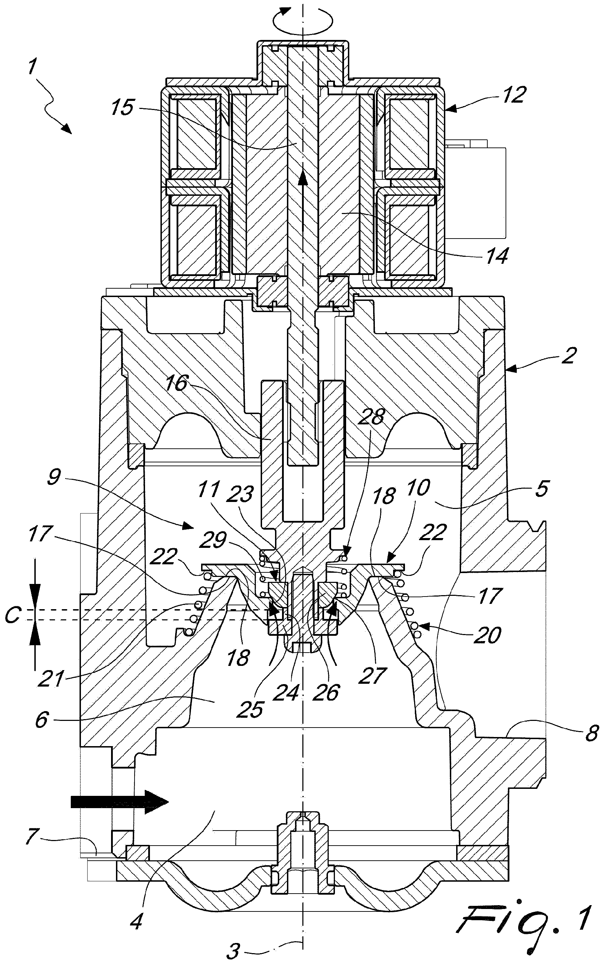

With particular reference to Figures 1 to 3, the flow rate adjustment device, particularly for boilers and the like, generally designated by the reference numeral 1, comprises a valve body 2 which extends along a preferred direction 3 and defines inside it a first and a second chamber 4 and 5 which communicate with each other through a passage channel 6 and communicate respectively with an intake manifold 7 and a discharge manifold 8.

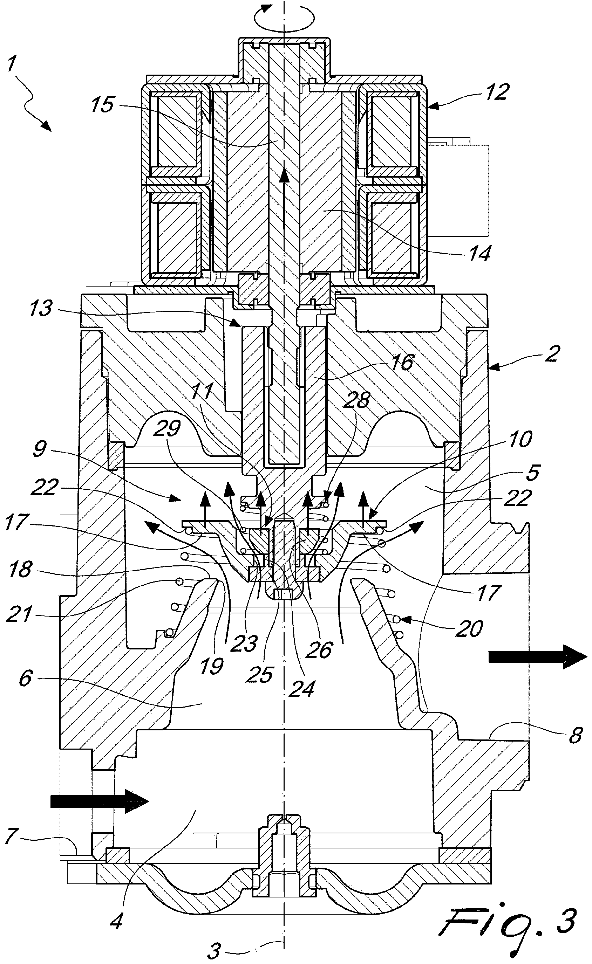

At the passage channel 6 there are flow control means 9 which are adapted for the transition of the adjustment device 1 from a closed state, shown in Figure 1, in which the passage channel 6 is blocked by the flow control means 9 with consequent isolation of the two chambers 4 and 5 with respect to each other, to an open state, shown in Figure 3, in which the passage channel 6 is free from the flow control means 9 in such a manner as to place the two chambers 4 and 5 in mutual communication for the passage of a fluid from the intake manifold 7 to the discharge manifold 8.

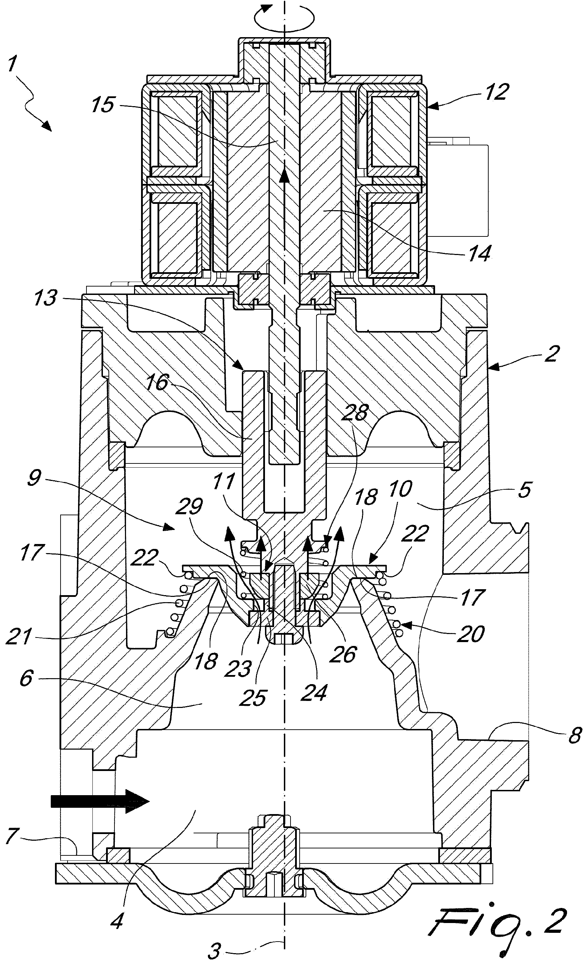

The peculiarity of the invention consists in that the flow control means 9 comprise a main flow control element 10 and a secondary flow control element 11 which can be actuated in sequence with respect to each other so as to define an intermediate state of the adjustment device 1, shown in Figure 2, in which the passage channel 6 is partially blocked, with consequent mutual communication of the two chambers 4 and 5 for the passage of a fluid from the intake manifold 7 to the discharge manifold 8 with a lower fluid flow rate than the fluid flow rate in the open state.

Conveniently, the adjustment device 1 is of the motorized type and comprises drive means 12, which are kinematically associated with the flow control means 9 for the automated transition from the closed state to the open state, passing through the intermediate state, and vice versa.

In more detail, such drive means 12 comprise an electric stepper motor associated with the flow control means 9 by means of a screw-and-nut coupling 13 which acts along the preferred direction 3 to convert the rotary motion of the rotor 14 of the electric stepper motor to a linear motion of the flow control means 9.

In more detail, the screw-and-nut coupling 13 comprises a screw 15 which is integral in rotation with the rotor 14 of the electric stepper motor and a nut 16 which is integral in translation with the flow control means 9.

In the proposed embodiment, the main flow control element 10 has a substantially disk-like geometric shape which defines, on its peripheral portion, an annular sealing surface 17 designed to come into contact with a respective abutment surface 18 which is defined by the valve body 2 at an outlet 19 of the passage channel 6 from the first chamber 4 in the direction of the second chamber 5.

More specifically, the main flow control element 10 is movable along the preferred direction 3 in a coaxial manner with respect to its axis of revolution between a first position corresponding to the open state of the safety valve 1, in which the annular sealing surface 17 is spaced apart from the abutment surface 18, and a second position corresponding to the closed and intermediate states of the adjustment device 1, in which the annular sealing surface 17 is in contact with the abutment surface 18.

Conveniently, in order to recover any play in the travel of the main flow control element 10, there are first elastic means 20 interposed between the main flow control element 10 and the valve body 2 in such a manner that the main flow control element 10 can be moved from its first position to its second position in contrast with the action of the first elastic means 20.

In the proposed embodiment, such first elastic means 20 comprise a first helical torsion spring 21 which is fitted externally to the abutment surface 18 and acts between the outside walls of the passage channel 6 and a flanged edge 22 of the main flow control element 10 which is external to the annular sealing surface 17.

As regards the secondary flow control element 11, it is integral in translation with the linearly movable element of the screw-and-nut coupling 13, i.e. with the nut 16, and is accommodated so that it can slide with play in a central orifice 23 defined by the main flow control element 10.

In more detail, the secondary flow control element 11 has a geometric shape extending along the preferred direction 3 that in longitudinal cross-section is shaped like a double T with a central portion 24 which is radially narrower and two end portions 25 and 26 which are radially wider and are, respectively, arranged in the chambers 4 and 5 in such a manner as to prevent the extraction of the secondary flow control element 11 from the central orifice 23.

Advantageously, the secondary flow control element 11 is movable along the preferred direction 3 in a manner that is coaxial with respect to its axis of revolution between a first position, corresponding to the closed state, in which the first end portion 25, which is arranged in the first chamber 4, is in abutment against the side of the main flow control element 10 that is directed toward the first chamber 4, and in which the second end portion 26, which is arranged in the second chamber 5, is spaced apart from the side of the main flow control element 10 that is directed toward the second chamber 5, and a second position, corresponding to the open state and to the intermediate state, in which the first end portion 25 is spaced apart from the side of the main flow control element 10 that is directed toward the first chamber 4, and in which the second end portion 26 is in abutment against the side of the main flow control element 10 that is directed toward the second chamber 5.

Conveniently, the first end portion 25 is configured to allow the throttling of the fluid from the first chamber 4 to the second chamber 5 in any position thereof, and the second end portion 26 has a calibrated surface 27 designed to block the central orifice 23 with the secondary flow control element 11 arranged in its first position.

Furthermore, there are second elastic means 28 interposed between the linearly movable element of the screw-and-nut coupling 13, i.e. the nut 16, and the main flow control element 10, in such a manner that the secondary flow control element 11 is movable from its second position to its first position in contrast with the action of the second elastic means 28.

In the above embodiment, the second elastic means 28 comprise a second helical torsion spring 29 which is fitted externally to the secondary flow control element 11 and acts between the linearly movable element of the screw-and-nut coupling 13, i.e. the nut 16, and the main flow control element 10.

The operation of the adjustment device 1 is described below.

In general, with the actuation of the flow control means 9 by the drive means 12, the former are moved away from the outlet 19 of the passage channel 6 with a consequent increase of the passage area of the fluid as a function substantially of the shape of the main flow control element 10, as shown in sequence from Figure 1 to Figure 3.

According to the invention, the addition of the secondary flow control element 11, which is smaller than the main flow control element 10, axially aligned with it and actuated by the same drive means 12, following actuation of the latter drive means, will open before the main flow control element 10, as shown in Figure 2, with a predetermined travel C at the end of which the opening of the main flow control element 10 will begin.

In more detail, with particular reference to Figure 1, in the closed state of the safety valve 1, the main flow control element 10 is in abutment with the outlet 19 of the passage channel 5 and the secondary flow control element 11 is also in abutment against the central orifice 23, because they are pushed by the screw-and-nut coupling 13 associated with the drive means 12.

In this position, the elastic means 20 and 28 are compressed and therefore preloaded with the maximum force, with the second elastic means 28 having a greater thrust than that of the first elastic means 20.

This condition makes it possible to maintain the closed state of the adjustment device 1.

As soon as the drive means 12 are actuated, the screw-and-nut coupling 13 linearly recalls the secondary flow control element 11, which begins to unblock the central orifice 23 while the main flow control element 10 remains in its closed position by virtue of the action and the disparity of the elastic means 20 and 28, as shown in Figure 2.

The passage surface for the fluid therefore is given by the area subtended by the difference between the area of the central orifice 23 and the transverse cross-section of the central portion 24 of the secondary flow control element 11.

This surface goes from zero, when the secondary flow control element 11 is closed, to its maximum, when the secondary flow control element 11 has traveled all of its travel C.

Upon completion of the travel C, the first end portion 25 of the secondary flow control element 11 abuts against the main flow control element 10, pulling it and therefore detaching it from the outlet 19 of the passage channel 6, as shown in Figure 3.

This movement results in the increase in the passage area for the fluid, which will be equal to the sum of the area that begins to open and the area that has already been opened by the secondary flow control element 11.

More specifically, the travel of the main flow control element 10 and of the secondary flow control element 11 for each step is given by the number of steps per rotation, and in step with the screw-and-nut coupling.

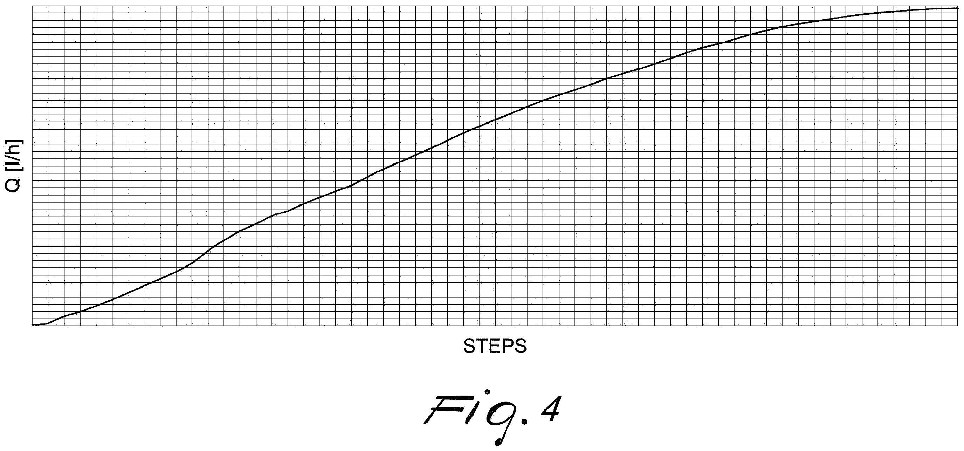

In this manner, as shown in Figure 4, it is possible to have an opening curve with a linear flow gradient from 0 up to the maximum opening, in so doing avoiding the jump found in the first steps of opening of the main flow control element 10.

In practice it has been found that the flow rate adjustment device according to the present invention achieves the intended aim and objects by making it possible to have a linear variation of the gas flow rate.

Advantageously, at the design stage, with two different flow control elements it is possible to obtain different solutions with adjustment curves that can be adapted to every type of adjustment need within the maximum flow rate envisaged.

In fact, the shapes of the two flow control bodies can be adapted to the various different requirements, which are necessary to have an optimal adjustment of the power of the burner even at very low levels, something that previously was very difficult, and a maximum flow rate that exceeds the rate possible with a single flow control element.

The flow rate adjustment device, particularly for boilers and the like, thus conceived, is susceptible of numerous modifications and variations all of which are within the scope of the appended claims.

Moreover, all the details may be substituted by other, technically equivalent elements.

In practice, the materials employed, provided they are compatible with the specific use, and the contingent dimensions and shapes, may be any according to requirements and to the state of the art.

The disclosures in Italian Patent Application No. 102022000005933 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A flow rate adjustment device (1), particularly for boilers and the like, which comprises a valve body (2) which extends along a preferred direction (3) and defines inside it a first and a second chamber (5) which communicate with each other through a passage channel (6) and communicate respectively with an intake manifold (7) and a discharge manifold (8); at said passage channel (6) there being flow control means (9) adapted for the transition of said adjustment device (1) from a closed state, in which said passage channel (6) is blocked by said flow control means (9) with consequent isolation of said two chambers (4, 5) with respect to each other, to an open state, in which said passage channel (6) is free from said flow control means (9) in such a manner as to place said two chambers (4, 5) in mutual communication for the passage of a fluid from said intake manifold (7) to said discharge manifold (8); **characterized in that** said flow control means (9) comprise a main flow control element (10) and a secondary flow control element (11) which can be actuated in sequence with respect to each other so as to define an intermediate state of said adjustment device (1) in which said passage channel (6) is partially blocked, with consequent mutual communication of said two chambers (4, 5) for the passage of a fluid from said intake manifold (7) to said discharge manifold (8) with a lower fluid flow rate than the fluid flow rate in said open state.

2. The adjustment device (1) according to claim 1, **characterized in that** it comprises drive means (12) which are kinematically associated with said flow control means (9) for the automated transition of the adjustment device (1) from said closed state to said open state, passing through said intermediate state, and vice versa.

3. The adjustment device (1) according to claim 2, **characterized in that** said drive means (12) comprise an electric stepper motor associated with said flow control means (9) by means of a screw-and-nut coupling (13) which acts along said preferred direction (3) to convert the rotary motion of the rotor (14) of said electric stepper motor to a linear motion of said flow control means (9).

4. The adjustment device (1) according to claim 3, **characterized in that** said screw-and-nut coupling (13) comprises a screw (15) which is integral in rotation with said rotor (14) of said electric stepper motor and a nut (16) which is integral in translation with said flow control means (9).

5. The adjustment device (1) according to one or more of the preceding claims, **characterized in that** said main flow control element (10) has a substantially disk-like geometric shape which defines, on its peripheral portion, an annular sealing surface (17) designed to come into contact with a respective abutment surface (18) which is defined by said valve body (2) at the outlet (19) of said passage channel (6) from said first chamber (4) in the direction of said second chamber (5); said main flow control element (10) being movable along said preferred direction (3) in a coaxial manner with respect to its axis of revolution between a first position corresponding to said open state, in which said annular sealing surface (17) is spaced apart from said abutment surface (18), and a second position corresponding to said closed state and to said intermediate state, in which said annular sealing surface (17) is in contact with said abutment surface (18).

6. The adjustment device (1) according to one or more of the preceding claims, **characterized in that** it comprises first elastic means (20) which are interposed between said main flow control element (10) and said valve body (2); said main flow control element (10) being movable from said first position thereof to said second position thereof in contrast with the action of said first elastic means (20).

7. The adjustment device (1) according to claims 5 and 6, **characterized in that** said first elastic means (20) comprise a first helical torsion spring (21) which is fitted externally to said abutment surface (18) and acts between the outside walls of said passage channel (6) and a flanged edge (22) of said main flow control element (10) which is external to said annular sealing surface (17).

8. The adjustment device (1) according to one or more of the preceding claims, **characterized in that** said secondary flow control element (11) is integral in translation with the linearly movable element (16) of said screw-and-nut coupling (13) and is accommodated so that it can slide with play in a central orifice (23) defined by said main flow control element (10); said secondary flow control element (11) having a geometric shape extending along said preferred direction (3) that in longitudinal cross-section is shaped like a double T with a central portion (24) which is radially narrower and two end portions (25, 26) which are radially wider and are, respectively, arranged in said chambers (4, 5) in such a manner as to prevent the extraction of said secondary flow control element (11) from said central orifice (23); said secondary flow control element (11) being movable along said preferred direction (3) in a manner that is coaxial with respect to its axis of revolution between a first position, corresponding to said closed state, in which the first of said end portions (25, 26), which is arranged in said first chamber (4), is in abutment against the side of said main flow control element (10) that is directed toward said first chamber (4), and in which the second of said end portions (25, 26), which is arranged in said second chamber (5), is spaced apart from the side of said main flow control element (10) that is directed toward said second chamber (5), and a second position, corresponding to said open state and to said intermediate state, in which said first end portion (25) is spaced apart from said side of said main flow control element (10) that is directed toward said first chamber (4), and in which said second end portion (26) is in abutment against said side of said main flow control element (10) that is directed toward said second chamber (5); said first end portion (25) being configured to allow the throttling of said fluid from said first chamber (4) to said second chamber (5) in any position thereof; said second end portion (26) having a calibrated surface (27) designed to block said central orifice (23) with said secondary flow control element (11) arranged in said first position thereof.

9. The adjustment device (1) according to one or more of the preceding claims, **characterized in that** it comprises second elastic means (28) which are interposed between said linearly movable element (16) of said screw-and-nut coupling (13) and said main flow control element (10); said secondary flow control element (11) being movable from said second position thereof to said first position thereof in contrast with the action of said second elastic means (28).

10. The adjustment device (1) according to claims 8 and 9, **characterized in that** said second elastic means (28) comprise a second helical torsion spring (29) which is fitted externally to said secondary flow control element (11) and acts between said linearly movable element (16) of said screw-and-nut coupling (13) and said main flow control element (10).
